# EUROPÄISCHE PATENTSCHRIFT

(11) **EP 0 760 790 B1**
(45) Veröffentlichungstag und Bekanntmachung des Hinweises auf die Patenterteilung: **07.06.2000**
(21) Anmeldenummer: 96904745.5
(22) Anmeldetag: 07.03.1996
(51) Int. Cl.: B65D 77/22

(54) **ÜBERDRUCKVENTIL FÜR EINEN VERPACKUNGSBEHÄLTER**
RELIEF VALVE FOR A PACKAGING CONTAINER
VALVE DE SURPRESSION D'UN EMBALLAGE

(30) Priorität: 27.03.1995 DE 19510489
(43) Veröffentlichungstag der Anmeldung: 12.03.1997
(73) Patentinhaber: ROBERT BOSCH GMBH, 70442 Stuttgart (DE)
(72) Erfinder: DOMKE, Klaus, D-71254 Ditzingen (DE)
(86) Internationale Anmeldenummer: DE9600402
(87) Internationale Veröffentlichungsnummer: WO9630280

(56) Entgegenhaltungen:
- DE-A- 2 848 835

## Beschreibung

### Stand der Technik

Die Erfindung geht aus von einem Überdruckventil für einen Verpackungsbehälter nach dem Oberbegriff des Anspruchs 1. Sauerstoffempfindliche Güter, beispielsweise Kaffee, werden, um ein Verderben durch Luftsauerstoff zu vermeiden, in dicht verschlossenen Behältern verpackt. Da aber frisch gerösteter Kaffee Kohlendioxid erzeugt und sich dadurch ein erhöhter, die Packung aufblähender und zum Platzen führender Druck aufbaut, ist es bekannt, den Verpackungsbehälter mit einem Überdruckventil auszurüsten. Ein beispielsweise aus der EP-A 0 023 703 bekanntes Überdruckventil, das über ein Durchgangsloch in der Wand des Verpackungsbehälters angeordnet ist, hat eine flexible Ventilmembran, die ein kreisförmiges Ventilloch in einer an der Wand des Verpackungsbehälters dicht verklebten Basisplatte überdeckt und sich bei einem bestimmten Packungsinnendruck einen Auslaßkanal bildend von der Basisplatte abhebt, durch den Kohlendioxidgas aus der Packung ins Freie abströmen kann. Schon ein geringer Packungsinnendruck bläht eine Beutelpackung aus flexiblem Packstoff unansehnlich auf. Bei dem oben erwähnten Überdruckventil, das sich im Markt bewährt hat, liegt der Öffnungsdruck bei etwa 5 mbar. Um den Öffnungsdruck zu reduzieren, hat die Anmelderin in der älteren deutschen Patentanmeldung P 44 35 492.4 bereits vorgeschlagen, das kreisförmige Ventilloch durch ein Langloch zu ersetzen. Damit kann der Öffnungsdruck auf ca. 3 mbar erniedrigt werden. Nachteilig dabei ist, daß das Werkzeug zum Stanzen des Langloches relativ aufwendig zu fertigen ist, da zwischen der Matrize und dem Stanzstempel zum Erreichen einer qualitativ guten Schnittkante nur ein Spiel von wenigen µm vorhanden sein darf. Weiterhin hat es sich in der Praxis gezeigt, daß es insbesondere beim kreisförmigen Loch bei einem Unterdruck in dem Verpackungsbehälter, wie er beispielsweise beim Evakuieren während des Verschließens des Verpackungsbehälters auftritt, zu einer Faltenbildung der Ventilmembran kommen kann. Eine derartige Faltenbildung bewirkt eine Undichtheit des Verpackungsbehälters.

### Vorteile der Erfindung

Das erfindungsgemäße Überdruckventil für einen Verpackungbehälter mit dem kennzeichnenden Merkmal des Anspruchs 1 hat demgegenüber den Vorteil, daß das Werkzeug zum Herstellen des Ventillochs einfacher und somit kostengünstiger hestellbar ist. Weiterhin ist es mit der erfindungsgemäßen Lochform möglich, mindestens einen gleich niedrigen Öffnungsdruck wie beim Langloch zu erzielen. Auch hat es sich gezeigt, daß die bisher bei Unterdruck im Verpackungsbehälter auftretende Faltenbildung der Ventilmembran bei der erfindungsgemäßen Ventillochform nicht mehr auftritt. Vorteilhaft ist es außerdem, daß in das Ventilloch zentral zugeführtes Dichtungsmittel zur Abdichtung zwischen der Basisplatte und der Ventilmembran besonders schnell in die Kanalzone eindringt.

Weitere Vorteile und vorteilhafte Weiterbildungen ergeben sich aus den Unteransprüchen und der Beschreibung.

### Zeichnung

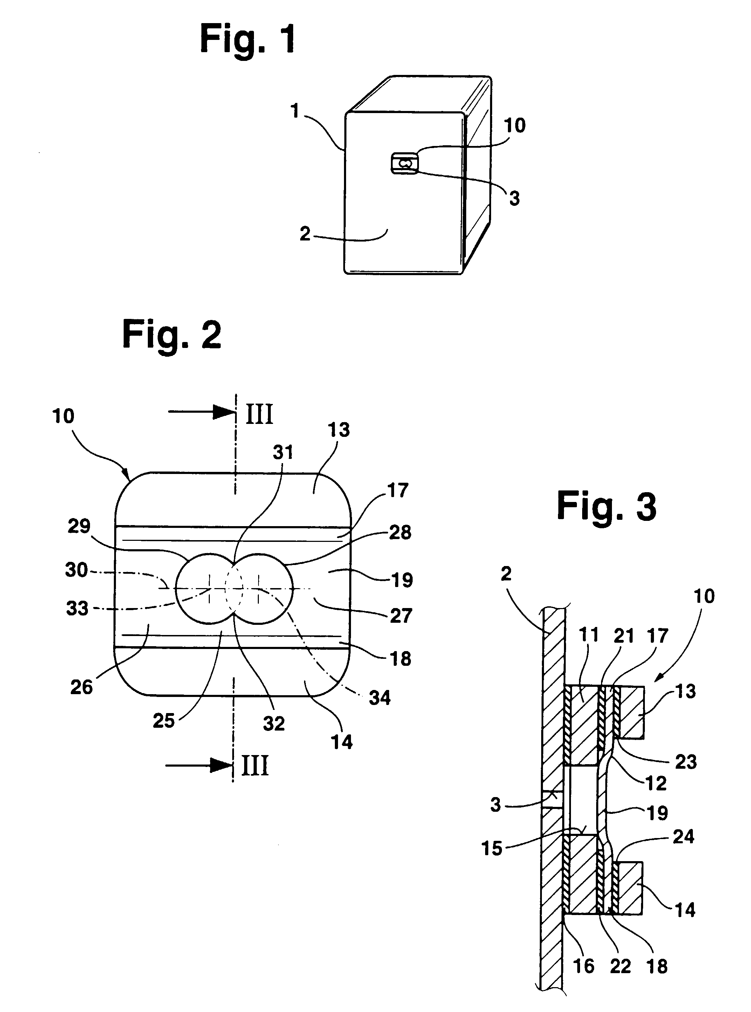

Ein Ausführungsbeispiel der Erfindung ist in der Zeichnung dargestellt und wird in der nachfolgenden Beschreibung näher erläutert. Es zeigen Figur 1 einen Verpackungsbehälter mit einen Überdruckventil in schaubildlicher Ansicht, Figur 2 das Überdruckventil nach Figur 1 in vergrößertem Maßstab in Draufsicht und Figur 3 das Überdruckventil nach Figur 2 im Querschnitt in der Ebene III-III der Figur 2.

### Beschreibung des Ausführungsbeispiels

Auf einer Seitenwand eines Verpackungsbeutels 1, in dem beispielsweise frisch gerösteter Kaffee dicht verpackt ist, ist ein Überdruckventil 10 an der Wandung 2 über einem Durchgangsloch 3 dicht befestigt. Das Überdruckventil 10 hat eine steife Basisplatte 11 aus einer Kunststoffolie in der Form eines Quadrats mit abgerundeten Ecken und eine deckungsgleiche Ventilmembran 12 aus einer flexiblen, dünnen Kunststoffolie sowie zwei Abstandhaltestreifen 13, 14 aus einer steifen Kunststoffolie.

Das Überdruckventil 10 ist mit der Unterseite der Basisplatte 11, die ein zentrales Ventilloch 15 hat, mittels einer Kleberschicht 16 an der Außenseite der Wandung 2 des Verpackungsbeutels 1 flächig verklebt, wobei das Ventilloch 15 mit dem Durchgangsloch 3 in der Wandung 2 ausgerichtet ist. Das Ventilloch 15 wird von der Ventilmembran 12 abgedichtet, von der zwei parallele Randzonnen 17, 18 mittels einer Kleberschicht 21, 22 mit der Oberseite der Basisplatte 11 fest verklebt sind. Die Ventilmembran 12 hat eine klebstofffrei belassene Mittelzone 19, deren zentraler Bereich 25 das Ventilloch 15 überspannt, und die mit ihren Außenbereichen 26, 27 auf der Oberseite der Basisplatte 11 in drucklosem Zustand dichtend aufliegt.

Die Abstandhaltestreifen 13, 14 sind auf den Randzonen 17, 18, mit denen die Ventilmembran 12 mit der Basisplatte 11 flächig verklebt ist, mittels Kleberschichten 23, 24 befestigt, wobei ihr Außenrand mit dem der Ventilmembran 12 bündig ist und ihre Breite etwas geringer ist als die Breite der Kleberschichten 21, 22, mit denen die Ventilmembran 12 auf der Basisplatte 11 befestigt ist.

Bei Druckaufbau im Inneren des Verpackungsbeutels 1 durch Abgabe von Kohlendioxidgas seitens des Packguts, beispielsweise Kaffee, wirkt der Druck durch das Durchgangsloch 3 in der Wandung 2 und das Ventilloch 15 in der Basisplatte 11 auf den zentralen Bereich der Mittelzone 19 der Ventilmembran 12. Bei steigendem Druck wölbt und hebt sich die Mittelzone 19 blasenförmig von der Oberseite der Basisplatte 11 ab, so daß sich schließlich zwischen der Basisplatte 11 und der Mittelzone 19 der Ventilmembran 12 ein Kanal bildet, der bis zu den freien Rändern der Mittelzone 19 reicht und durch den Gas abströmen kann.

Um den Öffnungdruck des Überdruckventils 10 gering zu halten, ist das Ventilloch 15 aus zwei sich schneidenden, jeweils kreisförmigen Löchern 28, 29 ausgebildet, deren Mittelpunktsachse 30 sich in Richtung der Längsachse der klebstoffreien Mittelzone 19 der Ventilmembran 12, also in Längsrichtung des Ventilkanals, erstreckt. Die Länge des Ventillochs 15 ist vorzugsweise gleich oder größer der Hälfte der Längserstreckung der Basisplatte 11. Das Breiten/Längenverhältnis des Ventillochs 15 liegt im Bereich von 1:1,3 bis 1:2. Durch die Überschneidung der beiden Löcher 28, 29 werden zwei Lochspitzen 31, 32 ausgebildet, deren Abstand zur Mittelpunktsachse 30 abhängig vom Überschneidungsgrad, d.h. vom Abstand der Mittelpunkte 33, 34 der Löcher 28, 29 voneinander ist.

Bei einem Überdruck im Verpackungsbeutel 1 geht das Abheben der Ventilmembran 12 von der Basisplatte 11 von den beiden Lochspitzen 31, 32 aus. Daraus ergibt sich, daß über die Lage der Lochspitzen 31, 32, d.h. dem Überdeckungsgrad der beiden Löcher 28, 29 und dem Abstand dieser von der Mittelpunktsachse 30, der Öffnungsdruck des Überdruckventils 10 in gewissen Grenzen beeinflußt werden kann. Ist der Überdruck im Verpackungsbeutel 1 abgebaut, legt sich die Ventilmembran 12 an den beiden Lochspitzen 31, 32 zuletzt wieder an der Basisplatte 11 an. Es hat sich in der Praxis gezeigt, daß durch die erfindungsgemäße Form des Ventillochs 15 die Ventilmembran 12 bei einem Unterdruck im Verpackungsbeutel 1 nicht zur Faltenbildung und somit zur Undichtheit neigt. Dies hängt vermutlich damit zusammen, daß die beiden Lochspitzen 31, 32 bei einem Unterdruck gewissermaßen Stützen bilden, die eine Faltenbildung der Ventilmembran 12 verhindern.

Das Werkzeug zur Herstellung des Ventillochs 15 läßt sich einfach herstellen, indem für den Stanzstempel zwei abgeflachte Zylinderstifte aneinandergefügt werden. Ebenso läßt sich die Matrize hochgenau bsw. durch zwei gehonte Bohrungen ausbilden.

Zur besseren Abdichtung ist in den gattungsgemäßen Überdruckventilen üblicherweise ein Tropfen Dichtmittel zwischen der Basisplatte 11 und der Ventilmembran 12 eingebracht. Dies geschieht in der Regel direkt vor dem Anbringen des Überdruckventils 10 an der Wandung 2 des Verpackungsbeutels 1. Der Tropfen wird zentral durch das Ventilloch 15 auf die Unterseite der Ventilmembran 12 aufgebracht und es benötigt einige Zeit, bis dieser sich in der Kanalzone verteilt. Durch die erfindungsgemäße Ventillochform gelangt das Dichtmittel durch den geringen Abstand der Lochspitzen 31, 32 zur Mittelachse 30 besonders schnell zwischen die Basisplatte 11 und die Ventilmembran 12, so daß die Weiterverarbeitung der Überdruckventile 10 bzw. das Befüllen und Evakuieren des Verpackungsbeutels 1 direkt nach dem Anbringen der Überdruckventile 10 an den Verpackungsbeutel 1 erfolgen kann.

Die Erfindung ist nicht nur auf zwei kreisförmige, sich überschneidende Löcher beschränkt. Wenn das Überdruckventil 10 bzw. die Mittelzone 19 beispielsweise eine rechteckige Form aufweisen, so ist es auch denkbar, das Ventilloch aus mehr als zwei sich überschneidenden, kreisförmigen Löchern auszubilden, die entlang einer gemeinsamen Mittelachse angeordnet sind. Auch sind bsw. Anordnungen in Form eines Kleeblatts denkbar. Die Vorteile bzgl. der einfachen Werkzeugherstellung und Faltenvermeidung der Ventilmembran sind auch mit derartigen Anordnungen erzielbar.

Ergänzend wird bemerkt, daß die den Ventilkanal erzeugende klebstoffreie Mittelzone 19 des überdruckventils 10 auch dadurch gebildet werden kann, daß bei einer Ventilmembran 12 die auf der der Basisplatte 11 zugewandten Seite vollflächig mit Klebstoff befestigt ist, an der Mittelzone 19 ein dünner flexibler Abdeckstreifen aus einer Kunststoffolie verklebt ist.

## Patentansprüche

1. Überdruckventil (10) für einen Verpackungsbehälter (1) mit einer an der Wand (2) des Verpackungsbehälters (1) befestigten Basisplatte (11), die ein zentrales, ein Durchgangsloch (3) in der Wand (2) des Verpackungsbehälters (1) deckendes Ventilloch (15) aufweist, und mit einer auf der Basisplatte (11) mit zwei parallelen Randzonen (17, 18) befestigten, eine Kanalzone freilassenden Ventilmembran (12), die das Ventilloch (15) überdeckt und in Schließlage auf der Basisplatte (11) dicht aufliegt, dadurch gekennzeichnet, daß das Ventilloch (15) aus wenigstens zwei sich schneidenden, kreisförmigen Öffnungen (28, 29) ausgebildet ist.

2. Überdruckventil nach Anspruch 1, dadurch gekennzeichnet, daß die Mittelpunkte (33, 34) der Öffnungen (28, 29) auf einer gemeinsamen Mittelpunktsachse (30) angeordnet sind.

3. Überdruckventil nach Anspruch 1 oder 2, dadurch gekennzeichnet, daß sich die Längsachse des Ventillochs (15) in der Längsachse der Kanalzone erstreckt.

4. Überdruckventil nach einem der Ansprüche 1 bis 3, dadurch gekennzeichnet, daß das Ventilloch (15) ein Breiten/Längenverhältnis im Bereich von 1:1,3 bis 1:2 hat.

5. Überdruckventil nach einem der Ansprüche 1 bis 4, dadurch gekennzeichnet, daß die Länge des Ventillochs (15) gleich oder größer ist als die Hälfte der Längserstreckung des Überdruckventils (10) in gleicher Richtung.

## Claims

1. Pressure relief valve (10) for a packaging container (1), with a baseplate (11) which is fastened to the wall (2) of the packaging container (1) and which has a central valve hole (15) covering a passage hole (3) in the wall (2) of the packaging container (1), and with a valve diaphragm (12) which is fastened to the baseplate (11) by means of two parallel edge zones (17, 18) and leaves free a channel zone and which covers the valve hole (15) and, in the closing position, rests sealingly on the baseplate (11), characterized in that the valve hole (15) is formed from at least two intersecting circular orifices (28, 29).

2. Pressure relief valve according to Claim 1, characterized in that the mid-points (33, 34) of the orifices (28, 29) are arranged on a common mid-point axis (30).

3. Pressure relief valve according to Claim 1 or 2, characterized in that the longitudinal axis of the valve hole (15) extends in the longitudinal axis of the channel zone.

4. Pressure relief valve according to one of Claims 1 to 3, characterized in that the valve hole (15) has a width/length ratio in the range of 1:1.3 to 1:2.

5. Pressure relief valve according to one of Claims 1 to 4, characterized in that the length of the valve hole (15) is equal to or greater than half the longitudinal extent of the pressure relief valve (10) in the same direction.

## Revendications

1. Valve de surpression (10) pour un récipient d'emballage (1) comprenant une plaque de base (11) fixée sur la paroi (2) du récipient d'emballage (1), plaque de base (11) qui présente un trou central de valve (15) recouvrant un trou de passage (3) dans la paroi (2) du récipient d'emballage (1), et comprenant une membrane de valve (12), qui est fixée sur la plaque de base (11) par deux zones de bordure (17, 18) parallèles, et laisse dégagée une zone de canal, membrane de la valve qui recouvre le trou de valve (15) et repose de façon étanche en position fermée sur la plaque de base (11),
caractérisée en ce que
le trou de la valve (15) se compose de deux ouvertures de forme circulaire (28, 29), qui s'intersectent.

2. Valve de surpression selon la revendication 1,
caractérisée en ce que
les centres (33, 34) des ouvertures (28, 29) sont disposés sur un axe central commun (30).

3. Valve de surpression selon la revendication 1 ou 2,
caractérisée en ce que
l'axe longitudinal du trou de valve (15) s'étend dans l'axe longitudinal de la zone du canal.

4. Valve de surpression selon l'une des revendications 1 à 3,
caractérisée en ce que
le trou de la valve (15) présente un rapport entre sa largeur et sa longueur qui se situe dans la zone de 1:1,3 à 1:2.

5. Valve de surpression selon l'une des revendications 1 à 4,
caractérisée en ce que
la longueur du trou de la valve (15) est égale ou supérieure à la moitié de l'étendue longitudinale de la valve de surpression (10) dans le même sens.
